# EUROPEAN PATENT APPLICATION

(11) **EP 4 105 356 A1**
(43) Date of publication of application: **21.12.2022**
(21) Application number: 20918380.5
(22) Date of filing: 21.12.2020
(51) Int. Cl.: C23D 5/00, C03C 8/14

(54) **METHOD FOR MANUFACTURING GLASS LINING PRODUCT**

(30) Priority: 12.02.2020 JP 2020021894
(71) Applicant: NGK Insulators, Ltd., Nagoya-shi, Aichi 467-8530 (JP); NGK Chemitech, Ltd., Saitama 359-0001 (JP)
(72) Inventor: IWABUCHI,Muneyuki, Tokorozawa-shi, Saitama 359-0001 (JP); KAWASHIMA,Takashi, Tokorozawa-shi, Saitama 359-0001 (JP); GOTO,Hideki, Tokorozawa-shi, Saitama 359-0001 (JP)
(74) Representative: Mewburn Ellis LLP
(86) International application number: PCT/JP2020/047753
(87) International publication number: WO 2021/161661

(57) **Abstract**

A method for manufacturing a glass lining product including: a step of forming a ground coat layer having a thickness of 0.1 to 0.5 mm composed of one layer or a plurality of layers by applying a first glaze on a surface of a metal substrate and firing the first glaze; a step of forming an intermediate layer having a thickness of 0.4 to 1.1 mm composed of one layer or a plurality of layers by applying a second glaze on the ground coat layer and firing the second glaze; and a step of forming a cover coat layer having a thickness of 0.1 to 1.3 mm composed of one layer or a plurality of layers by applying a third glaze on the intermediate layer and firing the third glaze.

## Description

### CROSS REFERENCE TO RELATED APPLICATIONS

The present invention claims the benefit of priority to Japanese Patent Application No. 2020-021894 filed on February 12, 2020 with the Japanese Patent Office, the entire contents of which are incorporated herein by reference in its entirety.

### FIELD OF THE INVENTION

The present invention relates to a method for manufacturing a glass lining product.

### BACKGROUND OF THE INVENTION

Glass lining products are used in fields such as the chemical industry, pharmaceutical industry, food industry, and electronics industry, where high corrosion resistance and high product purity are required. A glass lining product is manufactured by fusing a glass lining composition having a predetermined composition with SiO₂ as a main component to the surface of a basis material to form a glass lining layer that has corrosion resistance, inertness, and heat resistance. The basis material is made of a metal substrate such as a low carbon steel sheet and a stainless-steel sheet, etc.

For glass lining products, the temperature inside the product is often controlled by heating or cooling an iron material from the outside of the product using a jacket or the like provided on the outside of the product. However, since a conventional glass lining layer has a lower thermal conductivity than the metal substrate, there has been a problem that it is difficult to finely control the temperature. Further, since the thermal conductivity of the glass lining layer is poor, the manufacturing lead time is prolonged, and the product quality and the yield may be deteriorated.

Accordingly, in order to improve the thermal conductivity of the glass lining layer, it has been proposed to set the particle size composition of the frit constituting a glass lining slurry composition within a specific range (Patent Literature 1: Japanese Patent No. 5860713). Specifically, there is proposed a glass lining composition composed of frit, characterized in that a particle size of the frit is in a range of 0.1 to 250 µm, a proportion of frit fine particles in a range of 0.1 to 1 µm is in a range of 1 to 50% by mass, and a normal particle size distribution of the frit is in the range of 1.5 to 20 µm as indicated at 50%.

In a glass lining composition, Na₂O is conventionally contained in order to match the thermal expansion coefficient with the metal substrate, lower the temperature at the time of melting the glass, and ensure the solubility of a plurality of components. That is, Na₂O acts to modify the glass network structure of the glass lining and to cut the SiO₂ network structure, thereby (I) increasing the linear thermal expansion coefficient and (ii) increasing the solubility, so it is an essential component for glass lining. However, the sodium component is easily eluted from the glass lining layer containing Na₂O, and this sodium component is mixed into the chemical solution during the chemical solution manufacturing process. Therefore, conventional glass lining products cannot be used in the production of the chemical solution used for manufacturing processes of semiconductors and TFT type panels.

Accordingly, it has been proposed to obtain a glass lining layer having a small elution amount of sodium component by forming an upper glazing layer containing no Na₂O on a lower glazing layer containing Na₂O (Patent Literature 2: Japanese Patent No. 5191384).

Further, since a conventional glass lining layer is made of an insulating material having a volume resistivity of 1 × 10¹⁰ to 1 × 10¹² Ω·m, when the liquid containing organic substance such as benzene and normal hexane having low conductivity is stirred, the generation amount of electric charge in the liquid greatly exceeded the leakage amount of electric charge, and the electrostatic charge becomes large, which could cause insulation breakdown of the glass lining layer, even if the glass lining product is grounded to the earth.

Accordingly, it is known that a metal fiber such as platinum is blended in the glass lining composition in order to suppress electrostatic charge of the glass lining product (Patent Literature 3: Japanese Patent No. 3783742, Patent Literature 4: Japanese Patent No. 3432399).

### PRIOR ART

### Patent Literature

[Patent Literature 1] Japanese Patent No. 5860713
[Patent Literature 2] Japanese Patent No. 5191384
[Patent Literature 3] Japanese Patent No. 3783742
[Patent Literature 4] Japanese Patent No. 3432399

### SUMMARY OF THE INVENTION

As described above, the characteristics required for glass lining products are diverse and differ depending on the application. Therefore, a glass lining product having excellent one characteristic is not always excellent in other characteristics, and it is necessary to carefully select an appropriate glass lining product according to the application.

For example, even if a glass lining layer having excellent thermal conductivity is used, electrostatic charge cannot be suppressed, and it cannot be used in a field where the sodium component is undesirable.

Glass lining products that can suppress the elution amount of sodium component have a problem that thermal conductivity is poor due to the presence of air bubbles in the glass or a large film thickness, and productivity is low in applications involving heat exchange. Further, even if the elution amount of the sodium component can be suppressed, the electrostatic charge cannot be suppressed.

Glass lining products that can suppress electrostatic charge have a problem that thermal conductivity is poor due to the presence of air bubbles in the glass or a large film thickness, and productivity is low in applications involving heat exchange. Also, it cannot be used in fields where the sodium component is undesirable.

Therefore, it is desirable to obtain a hybrid type glass lining product having a plurality of characteristics in combination.

The present invention has been made in view of the above circumstances, and in one embodiment, it is an object of the present invention to provide a method for manufacturing a glass lining product which is excellent in thermal conductivity and capable of suppressing the elution amount of sodium component. In a preferred embodiment of the present invention, it is an object to provide a method for manufacturing a glass lining product which is further capable of suppressing electrostatic charge.
[1] A method for manufacturing a glass lining product, comprising: a step of forming a ground coat layer having a thickness of 0.1 to 0.5 mm composed of one layer or a plurality of layers by applying a first glaze on a surface of a metal substrate and firing the first glaze,
   the first glaze comprising frit with an average particle size of 1.5 to 20 µm and containing SiO₂ as a main component and Na₂O, and one or two or more inorganic refractory powders selected from a group consisting of silica stone, alumina and aluminum nitride;
      a step of forming an intermediate layer having a thickness of 0.4 to 1.1 mm composed of one layer or a plurality of layers by applying a second glaze on the ground coat layer and firing the second glaze,
   the second glaze comprising frit with an average particle size of 1.5 to 20 µm and containing SiO₂ as a main component and Na₂O; and
      a step of forming a cover coat layer having a thickness of 0.1 to 1.3 mm composed of one layer or a plurality of layers by applying a third glaze on the intermediate layer and firing the third glaze,
   the third glaze comprising frit with an average particle size of 1.5 to 50 µm and containing SiO₂ as a main component but no Na₂O.
[2] The method for manufacturing a glass lining product according to [1], wherein the first glaze, the second glaze and the third glaze all comprise metal fibers.
[3] The method for manufacturing a glass lining product according to [2], wherein the metal fibers comprise one or two or more selected from a group consisting of stainless-based metal fiber, noble metal-based fiber, and alloy fiber of platinum and a platinum group metal.
[4] The method for manufacturing a glass lining product according to [2] or [3], wherein
   the first glaze comprises 0.01 to 5 parts by mass of the metal fibers having a diameter of 0.1 to 2 µm and a length of 50 to 1000 µm, with respect to 100 parts by mass of the frit in the first glaze;
   the second glaze comprises 0.01 to 5 parts by mass of the metal fibers having a diameter of 0.2 to 2 µm and a length of 50 to 1000 µm, with respect to 100 parts by mass of the frit in the second glaze; and
   the third glaze comprises 0.01 to 5 parts by mass of the metal fibers having a diameter of 0.2 to 2 µm and a length of 50 to 1000 µm, with respect to 100 parts by mass of the frit in the third glaze.
[5] The method for manufacturing a glass lining product according to any one of [1] to [4], wherein the surface of the metal substrate has a surface roughness Ra of 2 to 10 µm as measured by JIS B 0633: 2001.
[6] The method for manufacturing a glass lining product according to any one of [1] to [5], wherein a content of Na₂O in the frit in the first glaze and the second glaze is 8 to 22% by mass, respectively.
[7] The method for manufacturing a glass lining product according to any one of [1] to [6], wherein the average particle size of the frit in the third glaze is larger than the average particle size of the frit in the first glaze and the average particle size of the frit in the second glaze.
[8] The method for manufacturing a glass lining product according to [7], wherein the average particle size of the frit in the third glaze is 10 to 50 µm.
[9] The method for manufacturing a glass lining product according to any one of [1] to [6], wherein the average particle size of the frit in the third glaze is 1.5 to 20 µm.
[10] The method for manufacturing a glass lining product according to any one of [1] to [9], wherein a total thickness of the ground coat layer, the intermediate layer and the cover coat layer is 0.6 to 1.8 mm.

By adopting the method for manufacturing a glass lining product according to one embodiment of the present invention, it is possible to obtain a glass lining product which is excellent in thermal conductivity and capable of suppressing the elution amount of the sodium component. Further, by adopting the method for manufacturing a glass lining product according to a preferred embodiment of the present invention, it is possible to obtain a glass lining product which is further capable of suppressing electrostatic charge. Therefore, according to the present invention, it is possible to obtain a hybrid type glass lining product having a plurality of characteristics in combination.

### BRIEF DESCRIPTION OF THE DRAWINGS

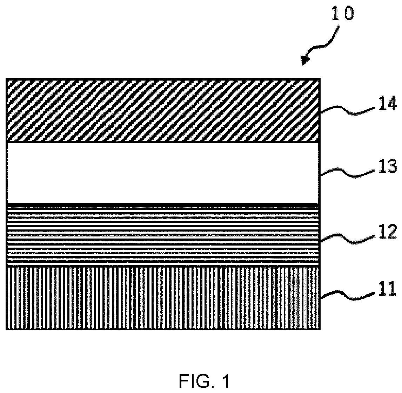

FIG. 1 is a schematic cross-sectional view of a layer structure of a glass lining product according to an embodiment of the present invention.

### DETAILED DESCRIPTION OF THE INVENTION

According to an embodiment of the present invention, a method for manufacturing a glass lining product comprises:
a step of forming a ground coat layer having a thickness of 0.1 to 0.5 mm composed of one layer or a plurality of layers by applying a first glaze on a surface of a metal substrate and firing the first glaze,
   the first glaze comprising frit with an average particle size of 1.5 to 20 µm and containing SiO₂ as a main component and Na₂O, and one or two or more inorganic refractory powders selected from the group consisting of silica stone, alumina and aluminum nitride; a step of forming an intermediate layer having a thickness of 0.4 to 1.1 mm composed of one layer or a plurality of layers by applying a second glaze on the ground coat layer and firing the second glaze,
   the second glaze comprising frit with an average particle size of 1.5 to 20 µm and containing SiO₂ as a main component and Na₂O; and
a step of forming a cover coat layer having a thickness of 0.1 to 1.3 mm composed of one layer or a plurality of layers by applying a third glaze on the intermediate layer and firing the third glaze,
   the third glaze comprising frit with an average particle size of 1.5 to 20 µm and containing SiO₂ as a main component but no Na₂O.

FIG. 1 schematically shows an example of a layer structure of a glass lining product 10 obtained by the manufacturing method. The glass lining product 10 has a surface structure in which a ground coat layer 12, an intermediate layer 13, and a cover coat layer 14 are laminated in this order on the surface of a metal substrate 11. In one embodiment, the total thickness of the ground coat layer, the intermediate layer and the cover coat layer is 0.6 to 1.8 mm. When the total thickness is 1.8 mm or less, preferably 1.4 mm or less, the effect of improving thermal conductivity can be obtained. When the total thickness is 0.6 mm or more, preferably 0.8 mm or more, safe corrosion resistance required for the product can be obtained

Examples of the glass lining product include, but are not limited to, a reactor, a stirring blade, a tank (for example, a stirring tank), a heat exchanger, a dryer, an evaporator, a filter, and the like.

### <1. Formation of ground coat layer>

The ground coat layer is formed by applying a first glaze on the surface of a metal substrate and firing the first glaze. Examples of the metal substrate include, but are not limited to, iron alloys such as low carbon steel and stainless steel. The shape of the metal substrate is not particularly limited, and examples thereof include a wall shape, a plate shape, a wing shape, and a bar shape.

For the surface of the metal substrate, the surface roughness Ra (JIS B 0601: 1994) is preferably 2 to 10 µm, and more preferably 2 to 9 µm, as measured by JIS B 0633: 2001. When the lower limit of the surface roughness Ra of the metal substrate is 2 µm or more, the adhesion strength between the metal substrate and the ground coat layer can be enhanced. The surface roughness Ra of the metal substrate is preferably 3 µm or more, more preferably 5 µm or more. Further, when the upper limit of the surface roughness Ra of the metal substrate is 9 µm or less, an advantage of suppressing generation of coarse bubbles in the ground coat layer can be obtained. The surface roughness Ra of the metal substrate is preferably 8 µm or less, more preferably 7 µm or less.

In addition, for the surface of the metal substrate, the surface roughness Rz (ten-point mean roughness) (JIS B 0601: 1994) is preferably 15 to 39 µm, as measured by JIS B 0633: 2001. When the lower limit of the surface roughness Rz of the metal substrate is 15 µm or more, the adhesion strength between the metal substrate and the ground coat layer can be further enhanced. The surface roughness Rz of the metal substrate is preferably 20 µm or more, more preferably 25 µm or more. Further, when the upper limit of the surface roughness Rz of the metal substrate is 39 µm or less, an advantage of suppressing generation of coarse bubbles in the ground coat layer can be obtained. The surface roughness Rz of the metal substrate is preferably 37 µm or less, more preferably 35 µm or less.

The surface roughness of the metal substrate can be controlled by performing a roughening treatment. For example, the surface of the metal substrate can be roughened by performing a sandblasting treatment. In one embodiment, the sandblasting treatment involves spraying an abrasive having an average particle size of 0.5 mm or more and 1.6 mm or less. By sandblasting using an abrasive having an average particle size of 1.6 mm or less, preferably 1.5 mm or less, it is possible to suppress occurrence of blow defects accompanied by bubbles. Further, by sandblasting using an abrasive having an average particle size of 0.5 mm or more, preferably 0.6 mm or more, it becomes easier to control the surface of the metal substrate within the above-mentioned range, and the adhesion between the ground coat layer and the metal substrate is easier to be improved. As the abrasive, although not limited to, alumina powder, iron grit powder, iron shot powder and the like can be preferably used, with a view to preventing excessive reaction with the glass. In the present specification, the average particle size of the abrasive is determined by a sieving test using test sieves defined in JIS Z8801-1: 2019. An integrated percentage (mass%) with respect to the nominal opening of each sieve is plotted, and in the figure connecting each point with a straight line, the value of the opening where the integrated percentage is 50% by mass is defined as the average particle size.

The conditions for forming the ground coat layer, such as the glazing operation and the firing temperature, are not particularly limited, and conventional and known operations for the glass lining can be used. However, the glazing operation is preferably performed by spraying because the thickness can be easily controlled. In addition, the firing temperature is preferably 800 to 900 °C for the reason of suppressing deformation of the metal substrate. The thickness of the ground coat layer, which is formed by applying the first glaze on the surface of the metal substrate and firing the first glaze, is preferably 0.1 to 0.5 mm. When the thickness of the ground coat layer is 0.5 mm or less, the thermal conductivity can be enhanced. The thickness of the ground coat layer is more preferably 0.4 mm or less. In addition, when the thickness of the ground coat layer is 0.1 mm or more, a stable glass lining layer can be obtained. The thickness of the ground coat layer is more preferably 0.2 mm or more. The ground coat layer can be composed of one layer or a plurality of layers.

In one embodiment, the first glaze comprises frit with an average particle size of 1.5 to 20 µm and containing SiO₂ as a main component and Na₂O, and one or two or more inorganic refractory powders selected from the group consisting of silica stone, alumina and aluminum nitride.

When the upper limit of the average particle size of the frit in the first glaze is 20 µm or less, it is possible to apply the glaze with a very thin thickness, the obtained glass lining layer can be remarkably thinned, and the diameter of internal bubbles in the glass lining layer can be reduced due to the shortened distance of void between the frit particles. The average particle size of the frit is preferably 15 µm or less, more preferably 10 µm or less. Further, when the lower limit of the average particle size of the frit is 1.5 µm or more, it is possible to obtain an advantage that aggregation of particles is less likely to occur and the uniformity of the film thickness when the film is thinned can be improved. The average particle size of the frit is preferably 3 µm or more, and more preferably 5 µm or more. In the present specification, the average particle size of the frit refers to the median diameter (D50) when a volume-based cumulative particle size distribution is measured by a laser diffraction method. In the Examples, the measurement was performed by a laser diffraction particle size distribution device (model: LMS-30) available from SEISHIN ENTERPRISE Co., Ltd.

The frit in the first glaze preferably comprises frit fine particles having a particle size in the range of 0.1 to 1 µm at a content of preferably 1 to 50% by mass, and more preferably 1.5 to 30% by mass. When the percentage of the frit fine particles having a particle size in the range of 0.1 to 1 µm is 1% by mass or more, it is possible to obtain an advantage that thin film glazing can be easily performed uniformly. In addition, when the percentage of the frit fine particles is 50% by mass or less, it is possible to prevent the ground coat layer from being peeled off or cracked. In the present specification, the content of fine particles having a particle size in the range of 0.1 to 1 µm in the frit is determined based on a volume-based particle size distribution measured by a laser diffraction method. In the Examples, the measurement was performed by a laser diffraction particle size distribution device (model: LMS-30) available from SEISHIN ENTERPRISE Co., Ltd.

The particle size of the frit in the first glaze is preferably in the range of 0.1 to 250 µm, more preferably in the range of 0.1 to 149 µm. When the particle size of the frit is 0.1 µm or more, it is possible to prevent the particles from aggregating. In addition, when the particle size of the frit is 250 µm or less, the film thickness uniformity when a spray gun is used can be improved. In the present specification, the range of the particle size of the frit can be determined from a volume-based cumulative particle size distribution measured by a laser diffraction method.

For the frit having the powder characteristics as described above, it can be obtained by rapid cooling and coarsely pulverizing a glass melt having a predetermined composition, then subjecting it to dry pulverization with a ball mill using alumina balls, and further performing classification and pulverization as appropriate.

The frit in the first glaze comprises SiO₂ as a main component, and Na₂O. The first glaze forms a ground coat layer in close contact with the metal substrate. Therefore, it is important to improve the adhesion by bringing the thermal expansion coefficient closer to that of the metal substrate by containing Na₂O. The fact that the frit comprises SiO₂ as a main component means that the mass concentration of SiO₂ in the frit is the highest. The concentration of SiO₂ in the frit is preferably 41 to 72% by mass, more preferably 50 to 65% by mass. The concentration of Na₂O in the frit is preferably 8 to 22% by mass, more preferably 10 to 15% by mass.

In a preferred embodiment, the frit in the first glaze has the following composition.
(A) SiO₂ + TiO₂ + ZrO₂: 41 to 72% by mass provided that:
   SiO₂: 41 to 72% by mass
   TiO₂: 0 to 16% by mass
   ZrO₂: 0 to 10% by mass
(B) R₂O (R represents Na, K or Li): 8 to 22% by mass provided that:
   Na₂O: 8 to 22% by mass
   K₂O: 0 to 16% by mass
   Li₂O: 0 to 10% by mass
(C) R'O (R' represents Ca, Ba, Zn or Mg): 1 to 7% by mass provided that:
   CaO: 1 to 7% by mass
   BaO: 0 to 6% by mass
   ZnO: 0 to 6% by mass
   MgO: 0 to 5% by mass
(D) B₂O₃ + Al₂O₃: 1 to 18% by mass provided that:
   B₂O₃: 1 to 18% by mass
   Al₂O₃: 0 to 6% by mass
(E) CoO + NiO + MnO₂ + CeO₂: 0 to 6% by mass provided that:
   CoO: 0 to 6% by mass
   NiO: 0 to 5% by mass
   MnO₂: 0 to 5% by mass
   CeO₂: 0 to 5% by mass

When the content of the component (A) in the frit is 41% by mass or more, it is possible to prevent the strength of the frit itself from being lowered. Further, when the content of the component (A) in the frit is 72% by mass or less, it is possible to prevent the melt viscosity of the frit from becoming too high and the melting point of the first glaze from being excessively raised.

When the content of the component (B) in the frit is 8% by mass or more, the meltability of the frit can be improved. Further, when the content of the component (B) in the frit is 22% by mass or less, it is possible to prevent the linear thermal expansion coefficient of the frit from being excessively raised and the physical property balance from being impaired.

When the content of the component (C) in the frit is 1% by mass or more, the alkali resistance of the frit can be improved. When the content of the component (C) in the frit is 7% by mass or less, it is possible to prevent the melt viscosity of the frit from becoming too high and the melting point of the first glaze from being excessively raised.

When the content of the component (D) in the frit is 1% by mass or more, the effect of preventing devitrification can be obtained. Further, when the content of the component (D) in the frit is 18% by mass or less, a foaming phenomenon during firing can be suppressed.

When the content of the component (E) in the frit is 6% by mass or less, the effect of improving the adhesion to the metal substrate while suppressing a foaming phenomenon during firing can be obtained.

The first glaze further contains one or two or more inorganic refractory powders selected from the group consisting of silica stone, alumina and aluminum nitride. As a result, the firing temperature at the time when applying the first glaze can be increased (adjusted), and further, the ground coat layer can be further thinned, and the fire resistance and thermal conductivity can be further improved. The content of the inorganic refractory powder can be 20 to 120 parts by mass, preferably 40 to 100 parts by mass, with respect to 100 parts by mass of the frit. When the content of the inorganic refractory powder is 20 parts by mass or more with respect to 100 parts by mass of the frit, these effects are significantly exhibited. In addition, when the content of the inorganic refractory powder is 120 parts by mass or less with respect to 100 parts by mass of the frit, firing defects are less likely to occur.

The particle size of the inorganic refractory powder is preferably 149 µm or less, and more preferably in the range of 0.1 to 74 µm. When the particle size of the inorganic refractory powder is 149 µm or less, the ground coat layer can be easily thinned uniformly. When the particle size of the inorganic refractory powder is 0.1 µm or more, it is easily dispersed uniformly in the first glaze. In the present specification, the range of the inorganic refractory powder can be determined from a volume-based cumulative particle size distribution measured by a laser diffraction method. In one embodiment, the average particle size of the inorganic refractory powder can be 5 to 50 µm, preferably 10 to 40 µm, more preferably 15 to 25 µm. In the present specification, the average particle size of the inorganic refractory powder refers to the median diameter (D50) when a volume-based cumulative particle size distribution is measured by a laser diffraction method. In the Examples, the measurement was performed by a laser diffraction particle size distribution device (model: LMS-30) available from SEISHIN ENTERPRISE Co., Ltd.

In a preferred embodiment, the first glaze can further comprise metal fibers. When the first glaze comprises metal fibers, the electric resistance of the ground coat layer is lowered, and it is possible to suppress electrostatic charge of the glass lining product, and it is possible to improve the thermal conductivity. The metal fiber is preferably one or two or more selected from the group consisting of stainless-based metal fiber, noble metal-based fiber, and alloy fiber of platinum and a platinum group metal, although not limited. Examples of the noble metal-based metal fiber include Ag fiber (volume resistivity: 1.6 × 10⁻⁸ Ωm), Au fiber (volume resistivity: 2.4 × 10⁻⁸ Ωm), and Pt fiber (volume resistivity: 10.6 × 10⁻⁸ Ωm) and the like can be used. As the alloy fiber of platinum and a platinum group metal, an alloy of Pt and one or two or more selected from the group consisting of Pd, Ir, Rh, Os and Ru can be used, for example.

The amount of the metal fiber added to the frit is preferably 0.01 to 5 parts by mass with respect to 100 parts by mass of the frit. When the amount of the metal fiber added is 0.01 parts by mass or more with respect to 100 parts by mass of the frit, the conductivity can be significantly improved. The amount of the metal fiber added is more preferably 0.05 parts by mass or more, and even more preferably 0.1 parts by mass or more, with respect to 100 parts by mass of the frit. In addition, when the amount of the metal fiber added is 5 parts by mass or less with respect to 100 parts by mass of the frit, the spray applicability can be improved. The amount of the metal fiber added is more preferably 2 parts by mass or less, and even more preferably 1 part by mass or less, with respect to 100 parts by mass of the frit.

The diameter of the metal fiber is preferably 0.1 to 2 µm, more preferably 0.2 to 2 µm, and even more preferably 0.3 to 1 µm. When the diameter of the metal fiber is 0.1 µm or more, the metal fiber can be processed at low cost. In addition, when the diameter of the metal fiber is 2 µm or less, the spray applicability can be improved. As used in the present specification, the diameter of a metal fiber refers to the diameter of a circle having an area equal to the area of a cross section orthogonal to the longitudinal direction of the metal fiber.

The length of the metal fiber is preferably 50 to 1000 µm, more preferably 100 to 800 µm. When the length of the metal fiber is 50 µm or more, the effect of adding the metal fiber can be significantly exhibited. In addition, when the length is 1000 µm or less, the spray applicability can be improved.

Further, the average aspect ratio of the length / diameter of the metal fiber is preferably 50 or more. When the average aspect ratio of the length / diameter of the metal fiber is 50 or more, the electric resistance of the glass lining layer can be reduced without adding a large amount of the metal fiber.

When the first glaze comprises metal fibers, it is preferable to add a thickener. By adding the thickener, it is possible to prevent the metal fibers from settling and being unevenly distributed downward in the first glaze. Thereby, the effect of improving the electric conductivity and the effect of improving the thermal conductivity of the glass lining layer can be obtained. The thickener is preferably added in an amount of 32 to 65 parts by mass, more preferably 38 to 60 parts by mass, and even more preferably 45 to 55 parts by mass, with respect to 100 parts by mass of the frit. When the amount of the thickener added is 45 parts by mass or more with respect to 100 parts by mass of the frit, the effect of preventing the metal fibers from settling can be enhanced. In addition, when the amount of the thickener added is 65 parts by mass or less with respect to 100 parts by mass of the frit, the effect of improving the spray applicability can be obtained.

As the thickener, although not limited, a cellulose derivative can be preferably used. As the cellulose derivative, mention can be made to CMC (carboxymethyl cellulose), HEC (hydroxyethyl cellulose), HPMC (hydroxypropyl methyl cellulose), hydroxypropyl cellulose (HPC), methyl cellulose (MC) and the like. Among these, CMC (carboxymethyl cellulose) is preferable for the reason of suppressing generation of bubbles during firing. For the thickener, one type may be used alone, or two or more types may be used in combination.

When the first glaze comprises metal fibers, it is preferable to add a dispersant. By adding the dispersant, the uniform dispersibility of the metal fiber can be improved, and thereby the effect of improving the electric conductivity and the effect of improving the thermal conductivity can be obtained. Further, a glaze suitable for spraying can be obtained, even without using alcohol as a solvent. The dispersant is preferably added in an amount of 0.01 to 0.2 parts by mass, more preferably added in an amount of 0.02 to 0.1 parts by mass, and even more preferably added in an amount of 0.03 to 0.08 parts by mass, with respect to 100 parts by mass of the frit. When the amount of the dispersant added is 0.01 parts by mass or more with respect to 100 parts by mass of the frit, the dispersibility of the metal fiber can be enhanced. In addition, when the amount of the dispersant added is 0.2 parts by mass or less with respect to 100 parts by mass of the frit, the effect of suppressing odor can be obtained.

The dispersant is not limited, but for the reason of suppressing the generation of bubbles during firing, polymer-type dispersants such as a polycarboxylic acid-based dispersant, a naphthalene sulfonic acid formalin condensate-based dispersant, polyethylene glycol, a polyether-based dispersant, and a polyalkylene polyamine-based dispersant can be suitably used. As the polycarboxylic acid-based dispersant, an ammonium polycarboxylic acid salt can be preferably used, for example. For the dispersant, one type may be used alone or two or more types may be used in combination.

In addition, additives commonly used for glass lining (for example, clay, barium chloride, sodium nitrite, and the like) and a predetermined amount of solvent can be added to the first glaze. The clay can be added, without limitation, in an amount of 3 to 8 parts by mass, preferably 5 to 7 parts by mass, with respect to 100 parts by mass of the frit. Barium chloride can be added, though not limited, in an amount of 0.05 to 0.3% by mass, preferably 0.1 to 0.2% by mass, with respect to 100 parts by mass of the frit. Sodium nitrite can be added, though not limited, in an amount of 0.1 to 0.6 parts by mass, preferably 0.2 to 0.5 parts by mass, with respect to 100 parts by mass of the frit. Examples of the solvent used include, but not limited to, water and watersoluble solvents such as alcohol, and water is preferable because it has no odor and improves the working environment. Examples of the alcohol include ethanol. For the solvent, one type may be used alone, or two or more types may be mixed and used. The solvent can be added, though not limited, in an amount of 0 to 40 parts by mass, preferably 5 to 30 parts by mass, with respect to 100 parts by mass of the frit. The alcohol concentration in the first glaze is preferably 1% by mass or less, more preferably 0.1% by mass or less, and even more preferably 0% by mass.

### <2. Formation of intermediate layer>

The intermediate layer is formed by applying a second glaze on the ground coat layer and firing the second glaze.

The conditions for forming the intermediate layer, such as the glazing operation and the firing temperature, are not particularly limited, and conventional and known operations for the glass lining can be used. However, the glazing operation is preferably performed by spraying for the reason of thickness control. In addition, the firing temperature is preferably 700 to 800 °C because it is desirably lower than that for the ground coat. The thickness of the intermediate layer, which is formed by applying the second glaze on the ground coat layer and firing the second glaze, is preferably 0.4 to 1.1 mm. When the thickness of the intermediate layer is 1.1 mm or less, the thermal conductivity can be enhanced. The thickness of the intermediate layer is more preferably 1.0 mm or less, and even more preferably 0.8 mm or less. In addition, when the thickness of the intermediate layer is 0.4 mm or more, an advantage of suppressing air bubbles from the ground coat layer can be obtained. The thickness of the intermediate layer is more preferably 0.5 mm or more, and more preferably 0.6 mm or more. The intermediate layer can be composed of one layer or a plurality of layers.

In one embodiment, the second glaze comprises frit with an average particle size of 1.5 to 20 µm and containing SiO₂ as a main component and Na₂O.The preferred embodiments of the powder characteristics such as the average particle size of the frit, the ratio of the frit fine particles, and the particle size are the same as those of the frit in the first glaze, so the description thereof is omitted.

The frit in the second glaze comprises SiO₂ as a main component, and Na₂O. Since the second glaze also contains Na₂O as with the first glaze, the advantage of improving the adhesion to the ground coat layer can be obtained. The fact that the frit contains SiO₂ as a main component means that the mass concentration of SiO₂ in the frit is the highest. The concentration of SiO₂ in the frit is preferably 41 to 72% by mass, more preferably 45 to 72% by mass. The concentration of Na₂O in the frit is preferably 8 to 22% by mass, more preferably 10 to 20% by mass.

In preferred embodiments, the frit in the second glaze has the following composition for the same reasons as the frit in the first glaze.
(A) SiO₂ + TiO₂ + ZrO₂: 41 to 72% by mass provided that:
   SiO₂: 41 to 72% by mass
   TiO₂: 0 to 16% by mass
   ZrO₂: 0 to 10% by mass
(B) R₂O (R represents Na, K or Li): 8 to 22% by mass provided that:
   Na₂O: 8 to 22% by mass
   K₂O: 0 to 16% by mass
   Li₂O: 0 to 10% by mass
(C) R'O (R' represents Ca, Ba, Zn or Mg): 1 to 7% by mass provided that:
   CaO: 1 to 7% by mass
   BaO: 0 to 6% by mass
   ZnO: 0 to 6% by mass
   MgO: 0 to 5% by mass
(D) B₂O₃ + Al₂O₃: 1 to 18% by mass provided that:
   B₂O₃: 1 to 18% by mass
   Al₂O₃: 0 to 6% by mass
(E) CoO + NiO + MnO₂ + CeO₂: 0 to 6% by mass provided that:
   CoO: 0 to 6% by mass
   NiO: 0 to 5% by mass
   MnO₂: 0 to 5% by mass
   CeO₂: 0 to 5% by mass

For the purpose that the firing temperature can be lower than that of the first glaze and the corrosion resistance is not reduced, in the second glaze, it is preferable that the content of the one or two or more inorganic refractory powders selected from the group consisting of silica stone, alumina and aluminum nitride be as small as possible. The content of the inorganic refractory powder is preferably 10 parts by mass or less, more preferably 5 parts by mass or less, and even more preferably 1 part by mass or less, with respect to 100 parts by mass of the frit.

In a preferred embodiment, the second glaze can further comprise metal fibers. When the second glaze comprises metal fibers, the electric resistance of the ground coat layer is lowered, and it is possible to suppress electrostatic charge of the glass lining product, and it is possible to improve the thermal conductivity. Since the preferred embodiments of the metal fiber such as the type, addition amount, diameter, length, and average aspect ratio of the metal fiber are the same as those of the metal fiber in the first glaze, detailed description thereof is omitted.

When the second glaze comprises metal fibers, it is preferable to add a thickener and a dispersant. Since the preferred embodiments of the thickener and the dispersant are the same as those of the thickener and the dispersant in the first glaze, detailed description thereof is omitted.

In addition, additives commonly used for glass lining (for example, clay, barium chloride, sodium nitrite, and the like) and a predetermined amount of solvent can be added to the second glaze. Since the preferred embodiments of the additives and the solvent are the same as those of the additives in the first glaze, detailed description thereof is omitted.

### <3. Formation of cover coat layer>

The cover coat layer is formed by applying a third glaze on the intermediate layer and firing the third glaze.

The conditions for forming the cover coat layer, such as the glazing operation and the firing temperature, are not particularly limited, and conventional and known operations for the glass lining can be used. However, the glazing operation is preferably performed by spraying for the reason of thickness control. In addition, the firing temperature is preferably 700 to 800 °C because it is desirably lower than that for the ground coat. The thickness of the cover coat layer, which is formed by applying the third glaze on the intermediate layer and firing the third glaze, is preferably 0.1 to 1.3 mm. When the thickness of the cover coat layer is 1.3 mm or less, the thermal conductivity can be enhanced. The thickness of the cover coat layer is more preferably 1.0 mm or less, and even more preferably 0.8 mm or less. In addition, when the thickness of the cover coat layer is 0.1 mm or more, an advantage of effectively suppressing Na elution can be obtained. The thickness of the cover coat layer is more preferably 0.2 mm or more, and more preferably 0.3 mm or more. The cover coat layer can be composed of one layer or a plurality of layers.

In one embodiment, the third glaze comprises frit with an average particle size of 1.5 to 50 µm and containing SiO₂ as a main component but no Na₂O.

In one embodiment, the average particle size of the frit in the third glaze can be 1.5 to 20 µm, as with the average particle size of the frit in the first glaze and the frit in the second glaze, and the preferred ranges are the same as the average particle size of the frit in the first glaze and the frit in the second glaze.

In another embodiment, the average particle size of the frit in the third glaze can be 10 to 50 µm. In this case, it may be larger than the average particle size of the frit in the first glaze and the average particle size of the frit in the second glaze. When the average particle size of the frit in the third glaze is larger than the average particle size of the frit in the first glaze and the average particle size of the frit in the second glaze, there is an advantage that the thickness can be easily secured. When the lower limit of the average particle size of the frit is 10 µm or more, there is an advantage that a thickness can be secured with one layer. The average particle size of the frit is preferably 20 µm or more, and more preferably 30 µm or more. However, the upper limit of the average particle size of the frit is preferably 50 µm or less, and more preferably 40 µm or less, or otherwise the spray operation may be deteriorated. In the third glaze, the upper limit of the average particle size of the frit can be larger than that in the first glaze and the second glaze. This is because of the purpose of effectively suppressing Na elution.

The frit in the third glaze preferably comprises frit fine particles having a particle size in the range of 0.1 to 1 µm in an amount of 1 to 50% by mass, and more preferably 1.5 to 30% by mass. When the content of the frit fine particles having a particle size in the range of 0.1 to 1 µm is 1% by mass or more, it is possible to obtain an advantage that thin film can be easily applied uniformly. In addition, when the content of the frit fine particles is 50% by mass or less, it is possible to prevent the cover coat layer from being peeled off or cracked. In the present specification, the content of fine particles having a particle size in the range of 0.1 to 1 µm in the frit is determined based on a volume-based particle size distribution measured by a laser diffraction method. In the Examples, the measurement was performed by a laser diffraction particle size distribution device (model: LMS-30) available from SEISHIN ENTERPRISE Co., Ltd.

The particle size of the frit in the third glaze is preferably in the range of 0.1 to 250 µm, more preferably in the range of 0.1 to 149 µm. When the particle size of the frit is 0.1 µm or more, it is possible to prevent the particles from aggregating. In addition, when the particle size of the frit is 250 µm or less, the film thickness uniformity can be improved when a spray gun is used. In the present specification, the range of the particle size of the frit can be obtained from a volume-based cumulative particle size distribution measured by a laser diffraction method.

The frit having the powder characteristics as described above can be obtained by rapid cooling and coarsely pulverizing a glass melt having a predetermined composition, followed by dry pulverization with a ball mill using alumina balls, and further performing classification and pulverization as appropriate.

The frit in the third glaze does not comprise Na₂O but comprises SiO₂ as a main component. This makes it possible to suppress the elution amount of the sodium component. The fact that the frit contains SiO₂ as a main component means that the mass concentration of SiO₂ in the frit is the highest. The concentration of SiO₂ in the frit is preferably 40 to 75% by mass, more preferably 45 to 70% by mass. When the concentration of SiO₂ in the frit is 40% by mass or more, acid resistance and water resistance are improved. When the concentration of SiO₂ in the frit is 75% by mass or less, the viscosity does not become too high and the linear thermal expansion coefficient does not become too small.

In preferred embodiments, the frit in the third glaze comprises 40 to 75% by mass of SiO₂, 0 to 10% by mass of ZrO₂, 8 to 22% by mass R₂O (wherein R is one or two or more selected from the group consisting of Li, K, and Cs), and 1 to 7% by mass of R'O (wherein R' is one or two or more selected from the group consisting of Mg, Ca, Sr, and Ba), and Na₂O is not added.

When the content of ZrO₂ in the frit is 10% by mass or less, crystallization is less likely to occur and it is possible to prevent the viscosity from becoming too high. In addition, when the content of ZrO₂ in the frit is 0% by mass or more, water resistance and alkali resistance are improved. The preferred content of ZrO₂ in the frit is in the range of 2 to 8% by mass.

When the content of R₂O in the frit is 22% by mass or less, the water resistance is less likely to decrease. In addition, when the content of R₂O in the frit is 8% by mass or more, it is possible to prevent the viscosity from becoming too high. The preferred content of R₂O in the frit is in the range of 10 to 20% by mass.

When the content of R'O in the frit is 7% by mass or less, the acid resistance is improved. When the content of R'O in the frit is 1% by mass or more, the water resistance is improved. The preferred content of R'O in the frit is in the range of 2 to 5% by mass.

Further, the frit can comprise one or two or more selected from the group consisting of TiO₂, Al₂O₃, La₂O₃, B₂O₃ and ZnO. These components prevent phase separation and crystallization during glass lining firing, and are strongly fixed in the glass mesh structure, thereby filling and tightening the mesh, so that the water resistance is improved, and the generation of bubbles is suppressed.

Here, in the frit, the content of TiO₂ is in the range of 0 to 16% by mass, preferably 0 to 10% by mass, the content of Al₂O₃ is in the range of 0 to 6% by mass, preferably 0 to 4% by mass, the content of La₂O₃ is in the range of 0 to 4% by mass, preferably 0 to 2% by mass, the content of B₂O₃ is in the range of 0 to 18% by mass, preferably 0 to 14% by mass, and the content of ZnO is in the range of 0 to 6% by mass, preferably 0 to 4% by mass. When two or more types of them are used in combination, the total content of them is in the range of 1 to 10% by mass, preferably 1 to 8% by mass. When the content of each component and the total content of them exceed the upper limit, it is likely that the melting point of the frit will be higher and solubility will be deteriorated. When they fall below the lower limit, the effect by the addition of them will be less exerted.

Further, the frit can contain one or more coloring components selected from the group consisting of CoO, Sb₂O₃, Cr₂O₃, Fe₂O₃, SnO₂ and CeO₂ up to 3% by mass (in terms of Fe₂O₃ equivalent) with respect to 100% by mass of the frit. As the coloring component, CoO, which is a blue component, is preferable from the viewpoint of visibility. This provides the advantage that the surface condition such as corrosion state of the glass lining layer can be easily recognized. Here, if the content of the coloring component exceeds 3% by mass in terms of Fe₂O₃ equivalent, the acid resistance will be lowered and foaming phenomenon is likely to occur during firing. Note that the full text of Japanese Patent No. 5156277 is incorporated herein by reference.

In order to promote the melting of the frit in the third glaze, up to 10% by mass of the above SiO₂, Al₂O₃ and CaO components can be used in the form of fluoride. As the fluoride, for example, K₂SiF₆, K₃AlF₆, CaF₂ and the like can be used.

For the purpose that the corrosion resistance is not deteriorated, in the third glaze, it is preferable that the content of the one or two or more inorganic refractory powders selected from the group consisting of silica stone, alumina and aluminum nitride is as small as possible. The content of the inorganic refractory powder is preferably 10 parts by mass or less, more preferably 5 parts by mass or less, and even more preferably 1 part by mass or less, with respect to 100 parts by mass of the frit.

In preferred embodiments, the third glaze can further comprise metal fibers. When the third glaze comprises metal fibers, the electric resistance of the cover coat layer is lowered, and it is possible to suppress electrostatic charge of the glass lining product, and it is possible to improve the thermal conductivity. Since the preferred embodiments of the metal fiber such as the type, addition amount, diameter, length, and average aspect ratio of the metal fiber are the same as those of the metal fiber in the first glaze, detailed description thereof is omitted.

When the third glaze comprises metal fibers, it is preferable to add a thickener and a dispersant. Since the preferred embodiments of the thickener and the dispersant are the same as those of the thickener and the dispersant in the first glaze, detailed description thereof is omitted.

In addition, additives commonly used for glass lining (for example, clay, barium chloride, sodium nitrite, and the like) and a predetermined amount of solvent can be added to the third glaze. Since the preferred embodiments of the additives and the solvent are the same as those of the additives in the first glaze, detailed description thereof is omitted.

### EXAMPLES

Hereinafter, Examples of the present invention are shown together with Comparative Examples, but these Examples are provided for a better understanding of the present invention and its advantages, and are not intended to limit the present invention.

### <1. Preparation of frit>

A raw material formulation having the composition shown in Table 1 was melted by heating at 1260 °C for 4 hours, and then rapidly cooled to obtain a crude pulverized product. The obtained crude pulverized product was dry-pulverized by a conventional ball mill using conventional alumina balls, and the obtained pulverized product was classified under various conditions to obtain various frits having the particle size distribution shown in Table 1. The particle size distribution was determined based on a volume-based cumulative particle size distribution measured by a laser diffraction particle size distribution device (model: LMS-30) manufactured by SEISHIN ENTERPRISE Co., Ltd.

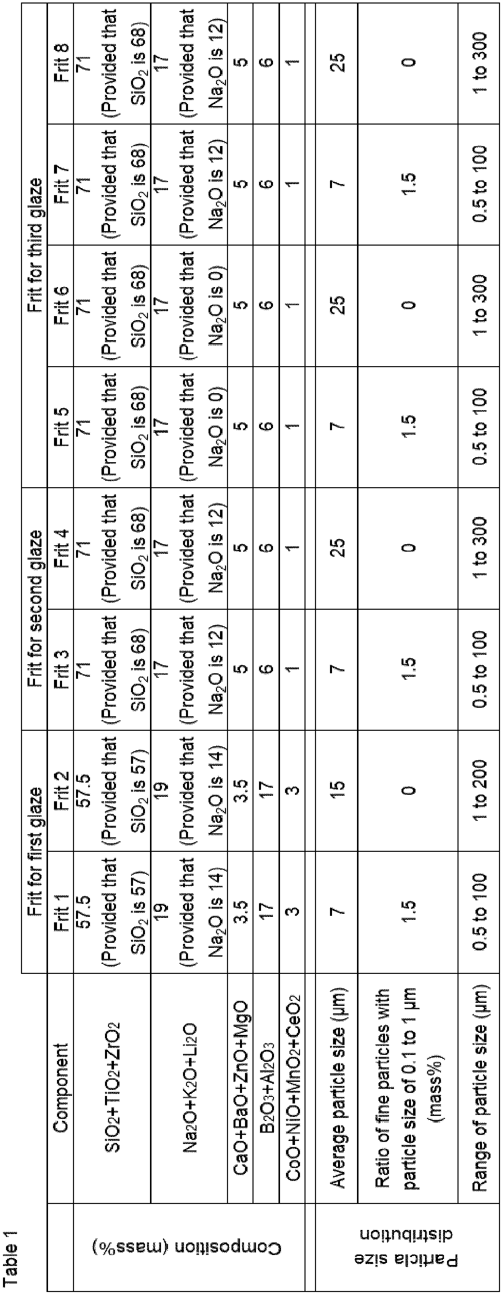

### <2. Preparation of glaze>

### (Examples 1 and 2, Comparative Examples 1 to 3)

The frit prepared above was selected according to the test number as shown in Table 2, and silica stone (average particle size 20 µm, range of particle size 0.1 µm to 100 µm) and an aqueous solution with 1.5% by mass of CMC were charged into a mixer at the mass ratio (solid content equivalent) shown in Table 2 with respect to 100 parts by mass of the frit. The mixture was stirred for 5 minutes. Then, ethanol was charged into the mixer at the mass ratio shown in Table 2 and further stirred for 20 minutes to obtain a slurry-like first glaze.

The frit prepared above was selected according to the test number as shown in Table 3, and an aqueous solution with 1.5% by mass of CMC was charged into a mixer at the mass ratio (solid content equivalent) shown in Table 3 with respect to 100 parts by mass of the frit. The mixture was stirred for 5 minutes. Then, ethanol was charged into the mixer at the mass ratio shown in Table 3 and further stirred for 20 minutes to obtain a slurry-like second glaze.

The frit prepared above was selected according to the test number as shown in Table 4, and an aqueous solution with 1.5% by mass of CMC was charged into a mixer at the mass ratio (solid content equivalent) shown in Table 4 with respect to 100 parts by mass of the frit. The mixture was stirred for 5 minutes. Then, ethanol was charged into the mixer at the mass ratio shown in Table 4 and further stirred for 20 minutes to obtain a slurry-like third glaze.

### (Examples 3 to 6, Comparative Examples 4)

The frit prepared above was selected according to the test number as shown in Table 2, and silica stone, platinum fiber, and an aqueous solution with 1.5% by mass of CMC were charged into a mixer at the mass ratio shown in Table 2 with respect to 100 parts by mass of the frit. The mixture was stirred for 10 minutes. Then, ethanol, water, and polycarboxylic acid ammonium salt were charged into the mixer at the mass ratio shown in Table 2 and further stirred for 20 minutes to obtain a slurry-like first glaze.

The frit prepared above was selected according to the test number as shown in Table 3, and platinum fiber and an aqueous solution with 1.5% by mass of CMC were charged into a mixer at the mass ratio shown in Table 3 with respect to 100 parts by mass of the frit. The mixture was stirred for 10 minutes. Then, ethanol, water, and polycarboxylic acid ammonium salt were charged into the mixer at the mass ratio shown in Table 3 and further stirred for 20 minutes to obtain a slurry-like second glaze.

The frit prepared above was selected according to the test number as shown in Table 4, and platinum fiber and an aqueous solution with 1.5% by mass of CMC were charged into a mixer at the mass ratio shown in Table 4 with respect to 100 parts by mass of the frit. The mixture was stirred for 10 minutes. Then, ethanol, water, and polycarboxylic acid ammonium salt were charged into the mixer at the mass ratio shown in Table 4 and further stirred for 20 minutes to obtain a slurry-like third glaze.

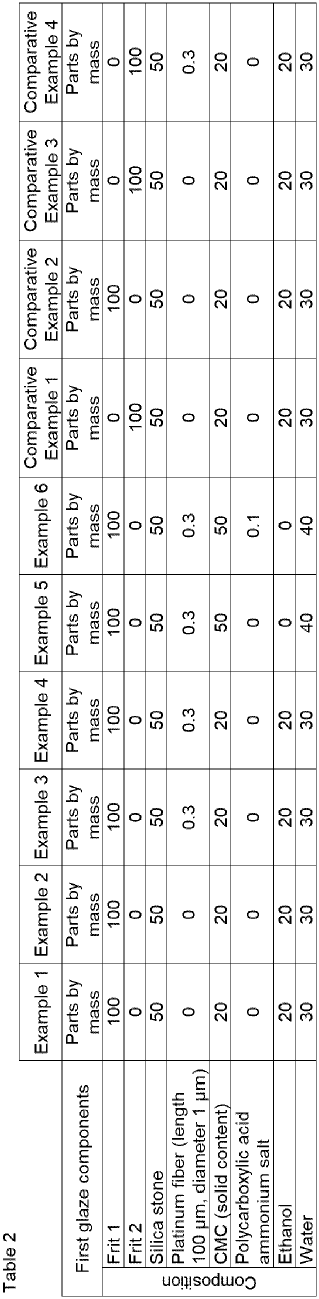

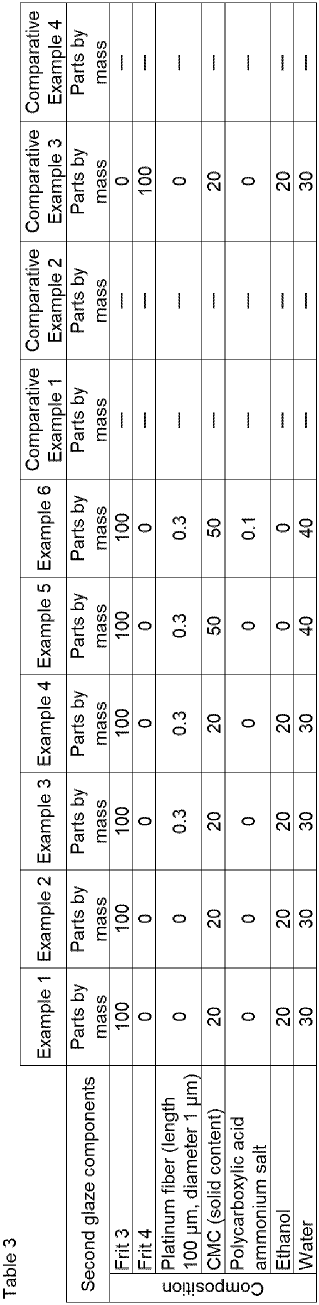

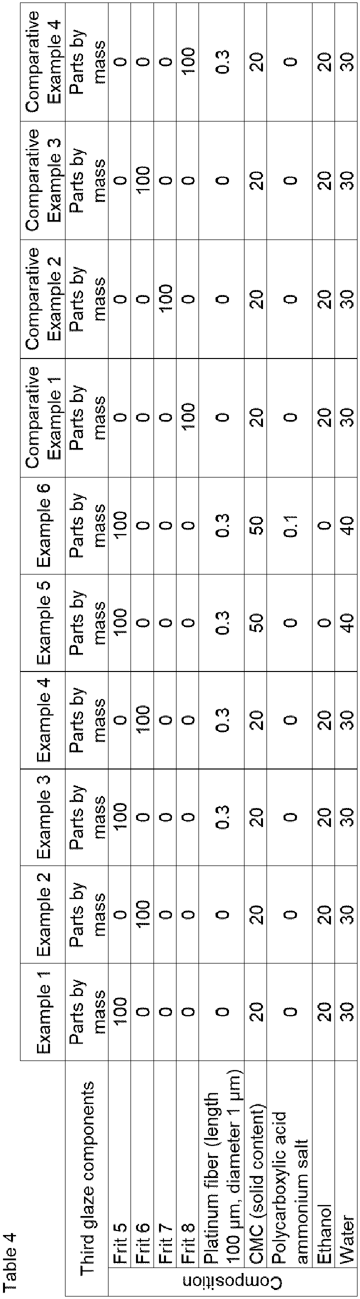

### <3. Thermal conductivity test>

A bowl-shaped test piece made of low carbon steel with a maximum diameter of 100 mm was prepared. Each of the first glazes of Examples and Comparative Examples was spray-coated on the inner surface of the test piece and fired at 860 °C for 15 minutes once to obtain a ground coat layer having the thickness shown in Table 5. Next, each of the second glazes of Examples and Comparative Examples was spray-coated on the ground coat layer and fired at 800 °C for 15 minutes for three times to obtain an intermediate layer having the thickness shown in Table 5 (excluding Comparative Examples 1, 2 and 4). Next, each of the third glazes of Examples and Comparative Examples was spray-coated on the intermediate layer and fired at 800 °C for 15 minutes for one to three times to obtain a cover layer having the thickness shown in Table 5. 200 cc of water was added to the test piece with the glass lining layer thus obtained. The time required for the water temperature to rise from 20 °C to 80 °C when heated with a 600 W heater was measured. The results are shown in Table 5 as the ratios assuming the time in Comparative Example 1 was 100%.

### <4. Na elution test>

A round bar made of low carbon steel having a diameter of 12 mm and a length of 80 mm was prepared. A glass lining layer composed of a ground coat layer, an intermediate layer, and a cover coat layer was formed on the surface of the round bar by the same process as that in the thermal conductivity test. The round bar with the glass lining layer thus obtained was immersed in 200 mL of ultrapure water (specific resistance: 18 MΩ) at 50 °C in a PTFE container for 100 hours to perform a Na elution test. After the test, the Na concentration in the ultrapure water was determined by ICP analysis (inductively coupled plasma mass spectrometry). The results are shown in Table 5 as the ratios assuming the Na elution amount in Comparative Example 1 was 100%.

### <5. Electrical resistance value>

A glass lining layer composed of a ground coat layer, an intermediate layer, and a cover coat layer was formed on one main surface of a low carbon steel sheet having a square shape with a side of 100 mm and a thickness of 5 mm by the same process as that in the thermal conductivity test. With respect to the steel sheet with the glass lining layer thus obtained, an electrode (probe) was applied to the surface of the glass lining layer and the steel sheet using a battery-powered insulation resistance tester, and the electric resistance value was measured. The results are shown in Table 5.

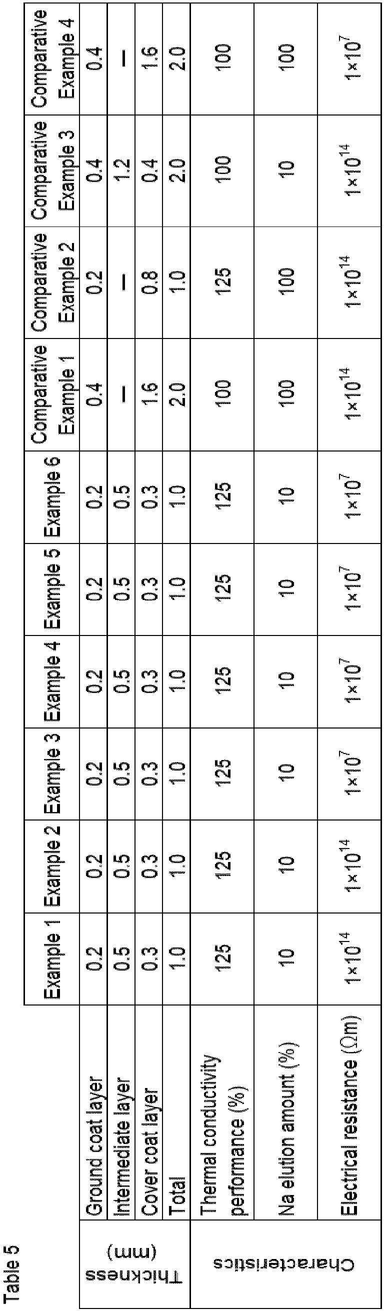

### <6. Mechanical impact test>

Sandblasting treatment was performed on one main surface of a low carbon steel sheet having a square shape with a side of 100 mm and a thickness of 5 mm. At this time, low carbon steel sheets having various surface roughness were obtained by changing the average particle size of the abrasive (brown alumina) during the sandblasting treatment. The surface roughness Ra and Rz (JIS B 0601: 1994) of each low carbon steel sheet after the sandblasting treatment were measured with a contact type portable roughness meter (MDT310 manufactured by MITECHINSTRUMENT) in accordance with JIS B 0633: 2001. The results are shown in Table 6.

Next, a glass lining layer of Example 1 composed of a ground coat layer, an intermediate layer, and a cover coat layer was formed by the same process as that of the thermal conductivity test. With respect to the steel sheet with the glass lining layer thus obtained, according to a mechanical impact test of DIN-51155 standard, the mechanical impact property of the glass lining layer and the steel sheet, and the state of blow defects accompanied by bubbles were measured. The results are shown in Table 6.

**Table 6**

| | Blasting condition | Steel sheet surface roughness after blasting (µm) | | DIN-51155 Mechanical Impact Test (peeling load: N) | Blow defects (exist / not exist) |
|---|---|---|---|---|---|
| | Average particle size of abrasives (mm) | Ra | Rz | | |
| Test No. 1 | 0.7 | 6 | 27 | 78 | Not exist |
| Test No. 2 | 1.7 | 10 | 50 | 78 | Exist |
| Test No. 3 | 2.4 | 16 | 60 | 78 | Exist |
| Test No. 4 | 0.3 | 3 | 15 | 69 | Not exist |

### Description of Reference Numerals

110 Glass lining product
11 Metal substrate
12 Ground coat layer
13 Intermediate layer
14 Cover coat layer

## Claims

1. A method for manufacturing a glass lining product, comprising:
a step of forming a ground coat layer having a thickness of 0.1 to 0.5 mm composed of one layer or a plurality of layers by applying a first glaze on a surface of a metal substrate and firing the first glaze,
the first glaze comprising frit with an average particle size of 1.5 to 20 µm and containing SiO₂ as a main component and Na₂O, and one or two or more inorganic refractory powders selected from a group consisting of silica stone, alumina and aluminum nitride;
a step of forming an intermediate layer having a thickness of 0.4 to 1.1 mm composed of one layer or a plurality of layers by applying a second glaze on the ground coat layer and firing the second glaze,
the second glaze comprising frit with an average particle size of 1.5 to 20 µm and containing SiO₂ as a main component and Na₂O; and
a step of forming a cover coat layer having a thickness of 0.1 to 1.3 mm composed of one layer or a plurality of layers by applying a third glaze on the intermediate layer and firing the third glaze,
the third glaze comprising frit with an average particle size of 1.5 to 50 µm and containing SiO₂ as a main component but no Na₂O.

2. The method for manufacturing a glass lining product according to claim 1, wherein the first glaze, the second glaze and the third glaze all comprise metal fibers.

3. The method for manufacturing a glass lining product according to claim 2, wherein the metal fibers comprise one or two or more selected from a group consisting of stainless-based metal fiber, noble metal-based fiber, and alloy fiber of platinum and a platinum group metal.

4. The method for manufacturing a glass lining product according to claim 2 or 3, wherein
the first glaze comprises 0.01 to 5 parts by mass of the metal fibers having a diameter of 0.1 to 2 µm and a length of 50 to 1000 µm, with respect to 100 parts by mass of the frit in the first glaze;
the second glaze comprises 0.01 to 5 parts by mass of the metal fibers having a diameter of 0.2 to 2 µm and a length of 50 to 1000 µm, with respect to 100 parts by mass of the frit in the second glaze; and
the third glaze comprises 0.01 to 5 parts by mass of the metal fibers having a diameter of 0.2 to 2 µm and a length of 50 to 1000 µm, with respect to 100 parts by mass of the frit in the third glaze.

5. The method for manufacturing a glass lining product according to any one of claims 1 to 4, wherein the surface of the metal substrate has a surface roughness Ra of 2 to 10 µm as measured by JIS B 0633: 2001.

6. The method for manufacturing a glass lining product according to any one of claims 1 to 5, wherein a content of Na₂O in the frit in the first glaze and the second glaze is 8 to 22% by mass, respectively.

7. The method for manufacturing a glass lining product according to any one of claims 1 to 6, wherein the average particle size of the frit in the third glaze is larger than the average particle size of the frit in the first glaze and the average particle size of the frit in the second glaze.

8. The method for manufacturing a glass lining product according to claim 7, wherein the average particle size of the frit in the third glaze is 10 to 50 µm.

9. The method for manufacturing a glass lining product according to any one of claims 1 to 6, wherein the average particle size of the frit in the third glaze is 1.5 to 20 µm.

10. The method for manufacturing a glass lining product according to any one of claims 1 to 9, wherein a total thickness of the ground coat layer, the intermediate layer and the cover coat layer is 0.6 to 1.8 mm.
